# EUROPEAN PATENT APPLICATION

(11) **EP 2 090 178 A1**
(43) Date of publication of application: **19.08.2009**
(21) Application number: 08101580.2
(22) Date of filing: 13.02.2008
(51) Int. Cl.: A23K 1/18, A23K 1/16

(54) **Pet food product and method for its manufacture**

(71) Applicant: Bühler AG, 9240 Uzwil (CH)
(72) Inventor: Munz, Konrad, 9215 Schönenberg (CH); Cienfuegos Jovellanos, Elena, 46370 Chiva Valencia (ES); von Reding, Walter, 6315, Oberägeri (CH)

(57) **Abstract**

A method for manufacturing enriched pet food comprising the steps of comminuting at least one food material; hydrothermally-mechanically treating the comminuted food product and mixing said comminuted food product with a further component to obtain an enriched pet food paste; and portioning said enriched pet food paste into individual enriched pet food portions. The further component may be an antioxidant or a mixture of antioxidants. Preferably, the entire antioxidant components are obtained from a cacao extract and have an ORAC value of 1000 to 5000 µmol trolox equivalent per gram.

## Description

The present invention relates to enriched pet food products and methods for manufacturing such enriched pet food products.

It is well known that many antioxidants and in particular polyphenols are beneficial to the health of humans and animals. Typical sources of polyphenols are fruits, nuts and vegetables such as berries, grapes, olives, cocoa, walnuts, peanuts or tea.

Consuming a balanced diet including some of these or similar polyphenol sources is believed to provide considerable health benefits to the consumer and may reduce the risk of cardiovascular disease and cancer.

However, some individuals do not get enough of these substances with their regular diet. For instance, some individuals/humans do not like many of these natural polyphenol sources due to their taste (bitterness) or because they are primarily available in processed food or beverage products with unwanted additional components such as alcohol, sugar or caffeine (e.g. in wine, chocolate or tea) with their known and unwanted effects on the organism. Also, some other individuals/animals such as carnivores (dogs and cats) tend to get even less of these substances.

Therefore, there has been a need to provide some pet food or pet treat that could supplement this deficiency in the pet's diet.

The present invention provides enriched pet foods and methods for their manufacture.

According to the invention, the method for manufacturing enriched pet food comprises the steps of:
a) comminuting at least one food material;
b) hydrothermally-mechanically treating the comminuted food product and mixing said comminuted food product with a further component to obtain an enriched pet food paste; and
c) portioning said enriched pet food paste into individual enriched pet food portions.

According to the invention, the enriched pet food, preferably manufactured using this method, comprises a basic food material matrix including an enriching component.

Thus, the enriching component is uniformly distributed and protected in the basic food matrix which may comprise any of proteins, lipids and carbohydrates.

Preferably, a first further component in step b) is an antioxidant or a mixture of antioxidants. Also, a flavor additive may be provided as a second further component in step b). This will make the enriched pet food product more palatable. Advantageously, the entire antioxidant components have an ORAC value of 1000 to 5000 µmol trolox equivalent per gram.

However, in a preferred version of the invention, the enriched pet food comprises a polyphenol mixture based on a natural extract from a polyphenol containing raw material where each type of polyphenol is included in a similar or identical proportion as in the raw material. A preferred raw material for polyphenol extraction is cacao. The cacao extract polyphenol enriched pet food obtained with this raw material is both healthy and tasty.

The antioxidant activity or free radical scavenging capacity of an antioxidant is quantified by determining ORAC (oxygen radical absorbance capacity) values.

As a "reference frame", this standardized measurement uses a first standard model substance (e.g. fluorescein) to be oxidized which is mixed with a second standard model substance (e.g. peroxyl radicals) which is the oxidizing substance. When the first model substance (fluorescein) is exposed to the oxidizing second model substance (peroxyl radicals), the concentration of the first model substance decreases (the fluorescent intensity of fluorescein decreases). This decrease in concentration (decrease in fluorescence) due to oxidative decay of the first standard model substance can be slowed down by adding a third standard model substance (trolox) which is an antioxidant. For a defined mixture having a defined initial concentration of the first standard model substance (fluorescein) and a defined initial concentration of the second standard model substance (peroxyl radicals), a decay curve (concentration versus time or fluorescent intensity versus time) of the first standard model substance is determined. By adding different defined initial amounts (in micromoles of trolox) of the third standard model substance (trolox) to the defined mixture, a set of standard decay curves of the first standard model substance (fluorescein) is determined.

The antioxidant capacity of a test/sample substance is then quantified by adding a defined initial amount (1 gram) of the test substance to the same defined mixture (fluorescein + peroxyl radicals). The concentration decay curves (fluorescence intensity decay curves) are determined. These measured test substance specific decay curves are compared with and related to the above standard decay curves.

As a result, the antioxidant activity of a given amount (1 gram) of the test/sample substance can be associated with the same antioxidant activity of a given amount (x micromoles) of the third standard model substance (trolox). Thus, an equivalent micromole value amount of the third standard model substance (trolox) can be identified as being equivalent to 1 gram of test/sample substance. This identified value is a measure of the antioxidant activity or free radical scavenging capacity of the test/sample substance and is measured in micromoles of trolox equivalents per gram of test/sample substance (µmolTE/g).

Preferably, the basic matrix food material comprises 15% to 50% by weight protein and 3% to 30% by weight fat. More preferably, it comprises 20% to 40% by weight protein and 10% to 20% by weight fat. This provides an organoleptically pleasing texture and a stable matrix encapsulating the further component. The basic matrix food material may comprise animal protein, vegetable protein, animal fat, vegetable fat and starch. The starch component of the basic food material may be at least partially gelatinized during the manufacturing of the enriched pet food and thus contributes to the stability of the basic food matrix.

The portioning in step c) may be followed by a step of drying said individual pet food portions in order to obtain enriched pet food articles. Preferably, the enriched pet food paste is shaped while being portioned in step c) followed by possible drying.

Alternatively, the portioning in step c) may be followed by a step of packaging said individual pet food portions in order to obtain enriched pet food paste packages. Such packages may be tubes from where the paste-like enriched pet food may be easily delivered by squeezing the tube.

Preferably, the hydrothermal-mechanical treatment and the mixing in step b) are carried out simultaneously. The hydrothermal-mechanical treatment in step b) may be carried out at a product water content of 15% to 30% by weight and at a product temperature of 80°C to 160°C. As a result, any starch component in the basic food matrix will be at least partially gelatinized. Preferably, the hydrothermal-mechanical treatment and the mixing in step b) are carried out in an extruder. The overall product dwell time (residence time) in the extruder should be 5s to 30s.

A first preferred hydrothermal-mechanical treatment uses a food material having a starch content of 20% to 50% of the food material dry weight. This starchy food material is gelatinized at temperatures of 70°C to 170°C, preferably 110°C to 160°C, at water contents of 15% to 40% based on the total weight (wet weight) of the food material. As a result, the gelatinized food material comprises a gelatinized starch matrix including the enriching further component such as antioxidants, flavors, etc. Further improvement of the starch matrix may be achieved by adding emulsifiers such as monoglycerides, diglycerides or phospholipids. Preferably, a first partial step of the hydrothermal-mechanical treatment is carried out in a preconditioner, preferably at a temperature of 70°C to 100°C and preferably during a dwell time of 10s to 10min in the preconditioner, and a second partial step of the hydrothermal-mechanical treatment is carried out in an extruder, preferably at a temperature of 110°C to 160°C and preferably during a dwell time of 10s to 120s in the extruder.

A second preferred hydrothermal-mechanical treatment uses a food material having a protein content of at least 50%, preferably more than 70% of the food material dry weight. This protein-rich food material is denatured / texturized at temperatures of 120°C to 160°C at water contents of 40% to 60% based on the total weight (wet weight) of the food material. As a result, the denatured food material comprises a denatured / texturized protein matrix including the enriching further component such as antioxidants, flavors, etc. Further improvement of the protein matrix may be achieved by adding crosslinking agents such as sulfur.

Advantageously, the further component in step b) is a polyphenol, preferably a cocoa polyphenol.

Preferably, the polyphenol is a cocoa polyphenol having a reduced theobromine level. This allows the cocoa polyphenol enriched pet food to be safely consumed by dogs which, unlike humans, metabolize theobromine very slowly and may be exposed to theobromine poisoning and possible death when eating only several bars of chocolate. Preferably, the relative theobromine portion is 1 to 3% and more preferably about 2% by weight of the overall added amount of polyphenol.

Preferably, the added polyphenols are polyphenols having theobromine levels of less than 100mg/1g (< 10% by weight of added polyphenol).

More preferably, the added polyphenols are polyphenols having theobromine levels of less than 50mg/1g (< 5% by weight of added polyphenol).

Preferably, the enriched pet food has theobromine levels of less than 10mg/1g (< 1% by weight of enriched pet food).

More preferably, the enriched pet food has theobromine levels of less than 5mg/1g (< 0.5% by weight of enriched pet food).

In a preferred embodiment, the enriched pet food comprises a first region having a first texture and a second region having a second texture. Preferably, the first region has a soft texture and the second region has a hard texture.

The first region may be an inner creamy region (preferably fat or water based or even an emulsion of both) of the pet food surrounded by the second region being an outer crispy region of the pet food. Such pet food having a first region and a second region of different textures may be formed by co-extrusion.

The region having the first texture may be formed by the first preferred hydrothermal-mechanical treatment described above, primarily using starch gelatinization of a starch-rich food matrix material.

The region having the second texture may be formed by the second preferred hydrothermal-mechanical treatment described above, primarily using protein denaturation of a protein-rich food matrix material.

The enriched pet food may comprise additional components such as oil or fats of animal and/or vegetable origin and/or lecithin which may provide further health benefits.

Preferably, the enriched pet food comprises a chocolate flavouring which is pleasing to most dogs.

## Claims

1. A method for manufacturing enriched pet food comprising the steps of:
a) comminuting at least one food material;
b) hydrothermally-mechanically treating the comminuted food product and mixing said comminuted food product with a further component to obtain an enriched pet food paste;
c) portioning said enriched pet food paste into individual enriched pet food portions.

2. A method as in claim 1, wherein a first further component in step b) is an antioxidant.

3. A method as in claim 2, wherein a second further component in step b) is a flavor additive.

4. A method as in claim 1 or 2, wherein the entire antioxidant components have an ORAC value of 1000 to 5000 µmol trolox equivalent per gram.

5. A method as in any one of claims 1 to 4, wherein the food material comprises at least one of proteins, lipids and carbohydrates.

6. A method as in claim 5, wherein the food material comprises 15% to 50% by weight protein and 3% to 30% by weight fat.

7. A method as in claim 6, wherein the food material comprises 20% to 40% by weight protein.

8. A method as in claim 6 or 7, wherein the food material comprises 10% to 20% by weight fat.

9. A method as in any one of claims 1 to 8, wherein the food material comprises at least one of the group consisting of animal protein, vegetable protein, animal fat, vegetable fat and starch.

10. A method as in any one of claims 1 to 9, wherein the portioning in step c) is followed by a step of drying said individual pet food portions in order to obtain enriched pet food articles.

11. A method as in any one of claims 1 to 10, wherein the portioning in step c) is followed by a step of packaging said individual pet food portions in order to obtain enriched pet food paste packages.

12. A method as in any one of claims 1 to 11, wherein the hydrothermal-mechanical treatment and the mixing in step b) are carried out simultaneously.

13. A method as in any one of claims 1 to 12, wherein the hydrothermal-mechanical treatment in step b) is carried out at a product water content of 15% to 30% by weight and at a product temperature of 80°C to 160°C.

14. A method as in any one of claims 1 to 13, wherein the hydrothermal-mechanical treatment and the mixing in step b) are carried out in an extruder.

15. A method as in claim 14, wherein the overall product dwell time in the extruder is 5s to 30s.

16. A method as in any one of claims 1 to 15, wherein the further component in step b) is a polyphenol.

17. A method as in claim 16, wherein the polyphenol is a cocoa polyphenol.

18. A method as in any one of claims 13 or 14, wherein the polyphenol is a polyphenol having a reduced theobromine level.

19. A method as in claim 18, wherein the relative theobromine portion is 1 to 3% by weight of the overall added amount of polyphenol.

20. A method as in any one of claims 1 to 19, wherein the enriched pet food paste is shaped while being portioned in step c).

21. An enriched pet food, preferably manufactured using the method of any one of claims 1 to 20, comprising a basic food material matrix including an enriching component.

22. An enriched pet food as in claim 21, wherein the further component comprises at least a polyphenol.

23. An enriched pet food as in claim 21 or 22, wherein the polyphenols are cocoa polyphenols.

24. An enriched pet food as in claim 22 or 23, wherein the polyphenols are polyphenols having reduced theobromine levels.

25. An enriched pet food as in claim 24, wherein the added polyphenols are polyphenols having theobromine levels of less than 100mg of theobromine per 1 g of added polyphenol.

26. An enriched pet food as in claim 24, wherein the added polyphenols are polyphenols having theobromine levels of less than 50mg of theobromine per 1g of added polyphenol.

27. An enriched pet food as in claim 24, having theobromine levels of less than 10mg of theobromine per 1g of enriched pet food.

28. An enriched pet food as in claim 24, having theobromine levels of less than 5mg of theobromine per 1g of enriched pet food.

29. An enriched pet food as in any one of claims 21 to 28, comprising a first region having a first texture and a second region having a second texture.

30. An enriched pet food as in claim 29, wherein said first region has a soft texture and said second region has a hard texture.

31. An enriched pet food as in claim 30, wherein said first region is an inner creamy region of the pet food surrounded by said second region being an outer crispy region of the pet food.

32. An enriched pet food as in any one of claims 29 to 31, wherein said first region and said second region are formed by co-extrusion.

33. An enriched pet food as in any one of claims 21 to 32, further comprising oil or fats of animal and/or vegetable origin and/or lecithin.

34. An enriched pet food as in any one of claims 21 to 32, wherein the theobromine portion is 0.2 to 0.6% by weight of the enriched pet food.
